# EUROPÄISCHE PATENTSCHRIFT

(11) **EP 1 280 679 B1**
(45) Veröffentlichungstag und Bekanntmachung des Hinweises auf die Patenterteilung: **17.01.2007**
(21) Anmeldenummer: 01940195.9
(22) Anmeldetag: 27.04.2001
(51) Int. Cl.: B60Q 3/04

(54) **BELEUCHTUNGSVORRICHTUNG**
ILLUMINATION DEVICE
DISPOSITIF D'ECLAIRAGE

(30) Priorität: 02.05.2000 DE 10021114
(43) Veröffentlichungstag der Anmeldung: 05.02.2003
(73) Patentinhaber: ROBERT BOSCH GMBH, 70442 Stuttgart (DE)
(72) Erfinder: SCHACH, Harald, 71287 Flacht (DE); BENOIT, Pascal, F-35870 Rennes (FR); GEBAUER, Matthias, 72072 Tübingen (DE); EWALD, Georg, 71287 Weissach (DE)
(86) Internationale Anmeldenummer: PCT/DE2001/001590
(87) Internationale Veröffentlichungsnummer: WO 2001/083264

(56) Entgegenhaltungen:
- EP-A- 0 362 993
- EP-A- 0 736 415
- FR-A- 2 760 414
- US-A- 4 274 217
- US-A- 5 645 337

## Beschreibung

### Stand der Technik

Die Erfindung geht aus von einer Beleuchtungsvorrichtung nach der Gattung des Hauptanspruchs. Es sind schon Beleuchtungsvorrichtungen bekannt, bei denen auf einer dem Benutzer abgewandten Seite Lichtquellen für eine Hinterleuchtung der Anzeigefläche angeordnet sind. Um eine homogene Helligkeitsverteilung bei der Hinterleuchtung der Anzeigefläche zu ermöglichen, muss das von den Lichtquellen abgestrahlte Licht stark gestreut werden, damit es sich über die gesamte Anzeigefläche gleichmäßig verteilen kann. Ferner ist bekannt, hinter der Anzeigefläche eine Lichtleiterplatte anzuordnen, an deren Seitenflächen Lichtquellen angeordnet sind. Das Licht dieser Lichtquellen wird in die Lichtleiterplatte eingekoppelt und in Richtung der Anzeigefläche umgelenkt. Hierbei kann auf eine Lichtstreuung verzichtet werden. Es müssen jedoch Vorkehrungen für die Lichtumlenkung getroffen werden und es muß Platz für die Lichtquelle in einem seitlichen Bereich der Anzeige vorgesehen sein.

Aus der EP 0736415 A 1 ist eine Beleuchtungsvorrichtung bekannt, bei der das Licht von einer Lichtquelle über einen Reflektor in einen Lichtleiter, der auf dem Reflektor aufliegt, eingekoppelt wird. Die Einkopplung erfolgt mittels einer in den Lichtleiter eingebrachten Vertiefung. Das Licht wird nun ungefähr senkrecht zu der ursprünglichen Lichtausbreitungsrichtung in dem Lichtleiter geführt. Aus der nach dem Prioritätstag des Patents angemeldeten Anmeldung EP 1055916 A2 ist eine Beleuchtung für ein Zeigerinstrument bekannt, bei dem das Licht einer Lichtquelle in einen Lichtschacht einkoppelt und von dort mittels einer Linse weitergeleitet, ausgekoppelt und in einem Zeiger eingekoppelt wird. In dem Zeiger wird das Licht durch einen Lichtleiter weitergeleitet.

### Vorteile der Erfindung

Die erfindungsgemäße Beleuchtungsvorrichtung mit den Merkmalen des Hauptanspruchs hat demgegenüber den Vorteil, dass das Licht durch die Verwendung eines Reflektors und einer Linse zwischen der Lichtquelle und der Anzeigefläche auf die gesamte Anzeigefläche homogen verteilt wird, so dass eine homogene Beleuchtung der Anzeigefläche ohne zusätzliche, aufzulegende Folien und ohne eine zusätzliche Lichtstreuung erfolgen kann. Besonders vorteilhaft ist dabei, dass durch die kombinierte Verwendung eines Reflektors und einer Linse zwischen der Lichtquelle und der Anzeigefläche eine besonders effiziente Beleuchtung der Anzeigefläche ermöglicht wird, da auch seitlich gestreutes Licht in Richtung der Anzeigefläche reflektiert wird.

Durch die in den Unteransprüchen aufgeführten Maßnahmen sind vorteilhafte Weiterbildungen und Verbesserungen der im Hauptanspruch angegebene Beleuchtungsvorrichtung möglich. Besonders vorteilhaft ist, den Abstand der Linse zu der Lichtquelle im Bereich der Brennweite der Linse zu wählen. Hierdurch fungiert die Linse nicht als ein abbildendes optisches System, sondern homogenisiert die Lichtverteilung der Lichtquelle.

Weiterhin ist vorteilhaft, den Lichtschacht als einen parabolischen Reflektor auszubilden, um eine besonders homogene Lichtverteilung zu erhalten.

Weiterhin ist vorteilhaft, als Lichtquellen insbesondere Leuchtdioden zu verwenden, da diese preisgünstig und einfach zu montieren sind. Während herkömmliche Leuchtdioden im allgemeinen Licht in einer Vorzugsrichtung abstrahlen, wird bei der erfindungsgemäßen Beleuchtungsvorrichtung ein Abstrahlungslichtkegel der Leuchtdiode für eine Beleuchtung einer Anzeigefläche aufgeweitet.

Weiterhin ist vorteilhaft, die Linse auf einer der Lichtquelle abgewandten Seite des Lichtschachts anzuordnen, da hierdurch die Linse z.B. an einen Lichtleiter angeformt wird, der während der Fertigung der Beleuchtungsvorrichtung auf den Lichtschacht aufgelegt wird. Dabei ist besonders vorteilhaft, durch die Anformung an einen Lichtleiter für jeweils nebeneinander liegende Lichtquellen eine benötigte Vielzahl von Linsen in einem Arbeitsgang zu erstellen.

Weiterhin ist vorteilhaft, eine Linse an der Lichtquelle anzuordnen, da hierbei die Lichtquelle und die Linse in einem Fertigungsprozess erstellt werden können, wobei es besonders vorteilhaft ist, die Linse an einen Körper der Leuchtdiode anzuformen bzw. z.B. mittels eines Prägestempels auszuformen.

Weiterhin ist vorteilhaft, die Linse in einem Bereich um die optische Achse der Linse als eine Zerstreuungslinse und außerhalb des Bereichs als eine Sammellinse auszuführen. Hierbei wird die Lichtverteilung dadurch homogenisiert, dass das Licht in zentralen, sehr hellen Bereichen der Lichtquelle zerstreut und in Randbereichen, in denen die Lichtquelle dunkel ist, gesammelt und in Richtung der Anzeigefläche gelenkt wird.

Weiterhin ist vorteilhaft, die erfindungsgemäße Beleuchtungsvorrichtung für eine Hinterleuchtung einer flächigen Anzeige zu verwenden, da durch die erfindungsgemäße Beleuchtungsvorrichtung eine homogene Hinterleuchtung auch mit günstigen Lichtquellen, z.B. mit Leuchtdioden, möglich ist.

Weiterhin ist vorteilhaft, eine erfindungsgemäße Beleuchtungsvorrichtung für eine Skalenanzeige zu verwenden, bei der einzelne Skalensegmente getrennt beleuchtbar und die zugehörige Beleuchtung jeweils getrennt ansteuerbar sind. Hierfür kann durch die Verwendung einer erfindungsgemäßen Beleuchtungsvorrichtung für jedes Skalensegment eine einerseits homogene und effiziente und andererseits preisgünstige Hinterleuchtung z.B. gegenüber einer Regelung einer Skalensegmentbeleuchtung mittels einer Flüssigkristallzelle realisiert werden. Insbesondere ist eine Verwendung für eine Tempomatanzeige von vorteil, bei der regelmäßig einzelne Segmente aktiviert bzw. deaktiviert werden.

### Zeichnung

Ausführungsbeispiele der Erfindung sind in der Zeichnung dargestellt und in der nachfolgenden Beschreibung näher erläutert. Es zeigen Figur 1a ein erstes Ausführungsbeispiel für eine erfindungsgemäße Beleuchtungsvorrichtung in einer Seitenansicht und Figur 1b das erste Ausführungsbeispiel in einer Aufsicht. Figur 2a zeigt eine weitere erfindungsgemäße Ausführung einer Beleuchtungsvorrichtung für eine Skalenanzeige in einer ersten Seitenansicht, Figur 2b zeigt die zweite erfindungsgemäße Ausführung in einer weiteren Seitenansicht und Figur 2c zeigt die zweite erfindungsgemäße Ausführung in einer Aufsicht. Figur 3 zeigt ein Ausführungsbeispiel für eine erfindungsgemäße Lichtquelle in einem Querschnitt. Figur 4a zeigt ein Ausführungsbeispiel für eine Anordnung einer erfindungsgemäßen Beleuchtungsvorrichtung zur Hinterleuchtung einer flächigen Anzeige. Figur 4b zeigt ein Skaleninstrument, das mit einer erfindungsgemäßen Beleuchtungsvorrichtung beleuchtet wird.

### Beschreibung des Ausführungsbeispiels

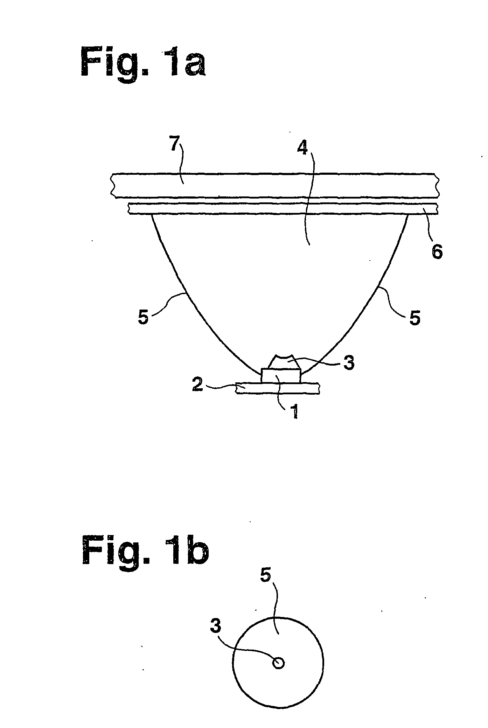

In der Figur 1a ist eine Seitenansicht eines ersten Ausführungsbeispiels einer erfindungsgemäßen Beleuchtungsvorrichtung mit einer Lichtquelle 1 dargestellt, die an einer Leiterplatte 2 angeordnet ist. An der Lichtquelle 1 ist eine Linse 3 angeordnet, durch die Licht in einen Lichtschacht 4 gelenkt wird. Der Lichtschacht 4 wird seitlich durch einen Reflektor 5 begrenzt. An einem der Lichtquelle 1 gegenüberliegenden Ende des Lichtschachts 4 ist eine Streuscheibe 6 angeordnet. Auf der dem Lichtschacht 4 abgewandten Seite der Streuscheibe 6 ist eine Flüssigkristallzelle 7 angeordnet. Die Lichtquelle 1 ist als eine Leuchtdiode ausgeführt. Über die Leiterplatte 2 wird die Lichtquelle 1 über in der Figur 1a nicht dargestellte Leiterbahnen mit einer Betriebsspannung versorgt. Das von der Linse 3 umgelenkte Licht der Lichtquelle 1 trifft entweder direkt auf die Streuscheibe 6 oder auf den Reflektor 5, der die Wände des Lichtschachts 4 bildet. Der Reflektor 5 ist als ein Rotationskörper mit einem parabelförmigen Querschnitt ausgeführt. Der Reflektor 5 ist vorzugsweise aus einem weißen, licht reflektierenden Kunststoffmaterial gefertigt. Ferner ist eine Ausführung als ein Metallreflektor möglich. Die Streuscheibe 6 ist aus einem Kunststoffmaterial gefertigt und besteht in einem bevorzugten Ausführungsbeispiel aus einem Kunststoffmaterial, in das lichtstreuende Partikel eingebracht sind, z.B. Partikel aus einem anderen Kunststoffmaterial mit einem anderen Brechungsindex. Auf der Streuscheibe 6 ist in der Figur 1a eine Flüssigkristallzelle 7 dargestellt, die in einem bevorzugten Ausführungsbeispiel über elektrisch einzeln ansteuerbare Bildpunkte verfügt. Details der Flüssigkristallzelle 7 sind in der Figur 1a nicht dargestellt. Das von der Lichtquelle 1 über die Linse 3 geleitete Licht trifft nur entweder direkt auf die Streuscheibe 6 oder zunächst auf den Reflektor 5, von dem es zu der Streuscheibe 6 geleitet wird. Die Streuscheibe 6 trägt zu einer weiteren Homogenisierung des Lichts bei und lenkt das Licht zu der Flüssigkristallzelle 7. In einem in der Figur 1a nicht gezeigten Ausführungsbeispiel kann an Stelle der Flüssigkristallzelle 7 auch eine unveränderliche Anzeige, z.B. ein Zifferblatt oder ein Warnfeld, z.B. aus einem transparenten Kunststoffmaterial mit einem aufgedruckten Warnsymbol aufgelegt sein. In einem bevorzugten Ausführungsbeispiel kann ein Warnsymbol direkt auf die Streuscheibe 6 aufgedruckt sein.

In der Figur 1b ist eine Aufsicht auf die erfindungsgemäße Beleuchtungsvorrichtung, die zu der Figur 1a beschrieben wurde, ohne die Streuscheibe 6 und die Flüssigkristallzelle 7 dargestellt. Der Lichtschacht 4 wird von dem Reflektor 5 gebildet. Im Zentrum des Reflektors 5 ist die Lichtquelle 1 mit der Linse 3 angeordnet.

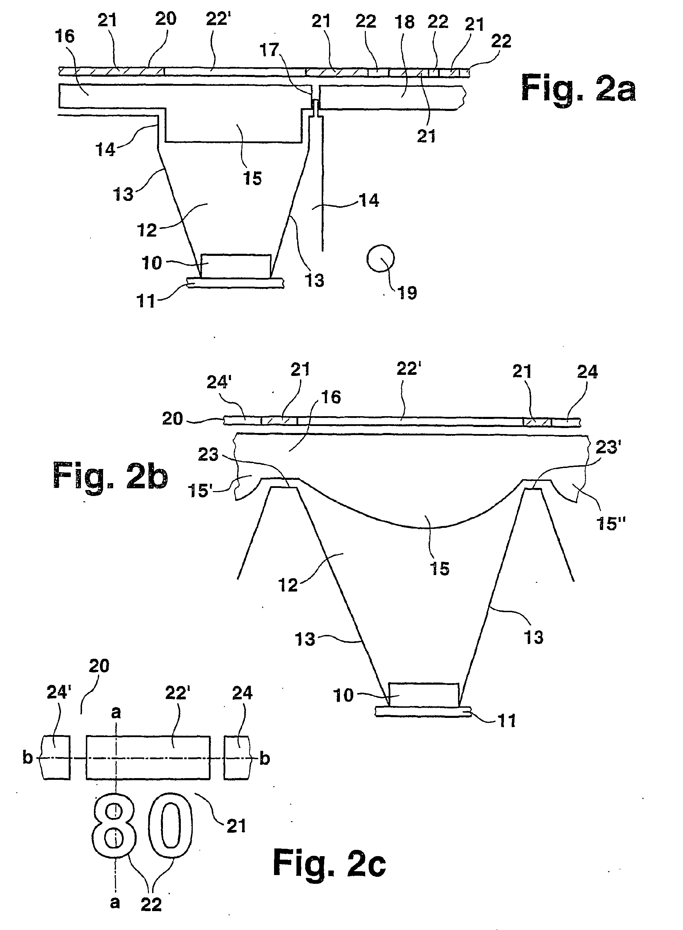

In der Figur 2a ist weiteres Ausführungsbeispiel einer erfindungsgemäßen Beleuchtungsvorrichtung dargestellt, bei dem eine Lichtquelle 10 auf einer Leiterplatte 11 angeordnet ist. Auf der der Leiterplatte 11 abgewandten Seite ist die Lichtquelle 10 an einem Lichtschacht 12 bzw. zumindest teilweise in den Lichtschacht 12 hineinragend angeordnet, der durch einen Reflektor 13 gebildet wird. Der Reflektor 13 ist aus einem Träger 14 ausgeformt. Auf der der Lichtquelle 10 abgewandten Seite des Lichtschachts 12 ist eine Linse 15 angeordnet, die an einen Lichtleiter 16 angeformt ist, der auf dem Träger 14 aufliegt. In eine Seitenfläche 17 des Lichtleiters ist Licht aus einer Lichtleiterplatte 18 einkoppelbar, die seitlich neben dem Lichtleiter 16 angeordnet ist und die an den Lichtleiter 16 angrenzt. Die Lichtleiterplatte 18 ist durch eine weitere Lichtquelle 19 beleuchtbar. Die Lichtquelle 10 ist durch den den Lichtschacht 12 bildenden Träger 14 optisch von der weiteren Lichtquelle 19 getrennt. Auf der der Lichtquelle 10 abgewandten Seite des Lichtleiters 16 ist ein Zifferblatt 20 angeordnet. Das Zifferblatt 20 weist erste Bereiche 21 auf, die lichtundurchlässig sind, und zweite Bereiche 22 auf, die lichtdurchlässig sind. Die Lichtquelle 10 ist vorzugsweise als eine Leuchtdiode ausgeführt, die über die Leiterplatte 11 mit einer Betriebsspannung versorgt wird. Der Träger 14 ist in einem bevorzugten Ausführungsbeispiel aus mit weißen Farbpartikeln gefärbten Kunststoffmaterial z.B. Polycarbonat ausgeführt. Hierdurch kann der Reflektor 13 durch eine Oberfläche des Trägers 14 gebildet werden. In einem in der Figur 2a nicht gezeigten Ausführungsbeispiel ist auch eine Metallbeschichtung des Trägers 14 möglich. Das von der Lichtquelle 10 abgestrahlte Licht gelangt entweder direkt zu der Linse 15 oder wird zunächst über den Reflektor 13 zu der Linse 15 umgelenkt. Das Zifferblatt 20 ist vorzugsweise aus einem transparenten Kunststoffmaterial gefertigt, bei dem die lichtundurchlässigen ersten Bereiche 21 z.B. durch Aufdrucken aufgebracht werden. Durch einen entsprechenden Aufdruck sind Symbole, Skalensegmente oder Zahlen ausbildbar. Durch die weitere Lichtquelle 19 ist Licht zu der Lichtleiterplatte 18 abstrahlbar, wobei die Lichtleiterplatte vorzugsweise aus einem lichtstreuenden Material besteht. Von der Lichtleiterplatte 18 wird Licht durch lichtdurchlässige zweite Bereiche 22 des Zifferblattes 20 gestrahlt. Ferner wird durch die Lichtleiterplatte 18 Licht zu der ersten Seitenfläche 17 des Lichtleiters 16 umgelenkt, so dass auch für den Fall, dass die Lichtquelle 10 nicht betrieben wird, ein Segment 22' auf der der Lichtquelle 10 abgewandten Seite der Linse 15 zumindest schwach beleuchtet wird. Das Segment 22' ist dann auch bei abgeschalteter Lichtquelle 10 erkennbar. Hierdurch wird eine Umschaltung zwischen einem schwach beleuchteten Zustand, nämlich eine Beleuchtung über die weitere Lichtquelle 19, die Lichtleiterplatte 18 und den Lichtleiter 16 sowie einem hell beleuchteten Zustand bei eingeschalteter Lichtquelle 10 gewährleistet. Von der Lichtquelle 10 wird dagegen nur unwesentlich Licht in die Lichtleiterplatte 18 weitergeleitet, da das Licht durch die Linse 15 in Richtung des Segments 22' gelenkt wird. Der Lichtleiter 16 sowie die Lichtleiterplatte 18 sind in einem bevorzugten Ausführungsbeispiel aus Polycarbonat gefertigt, wobei der Lichtleiter 16 sowie die Linse 15 hierbei vorzugsweise transparent ausgeführt sind.

In der Figur 2b ist eine andere Seitenansicht der erfindungsgemäßen Beleuchtungsvorrichtung gemäß der Figur 2a dargestellt. Auf dem Träger 14 liegt die Lichtleiter 16, an dem die Linse 15 angeformt ist, mit Auflageflächen 23, 23' auf. Die Linse 15 wölbt sich konvex in Richtung der Lichtquelle 10. An den Lichtleiter 16 schließen an den Auflageflächen 23 und 23' des Lichtleiters 16 auf den Träger 14 weitere Linsen 15' und 15" an, die zu weiteren, neben der erfindungsgemäßen Beleuchtungsvorrichtung angeordneten Beleuchtungsvorrichtungen gehören, die bevorzugt gleichartig aufgeführt sind. Der Abstand der Linse 15 zu der Lichtquelle 10 ist ungefähr gleich der Brennweite der Linse 15. Hierdurch ist die Linse 15 nicht abbildend, sondern führt eine Fouriertransformation des Bildes in der Brennebene durch, so dass das Segment 22' homogen hinterleuchtet wird. Durch nicht lichtundurchlässigen ersten Bereiche 21 ist das Segment 22' von anderen, transparenten Bereichen, d.h. Segmenten, 24, 24' des Zifferblatts 20 abgetrennt, so dass eine getrennte Hinterleuchtung der Segmente 22*'*, 24*'* und 24 möglich ist. Der Reflektor 13 weist in dem Ausführungsbeispiel gemäß der Figur 2a und 2b linear verlaufende Wände auf. In einem bevorzugten Ausführungsbeispiel hat der durch den Reflektor 13 begrenzte Lichtschacht 12 in einem Schnitt parallel zu der Linsenebene der Linse 15 einen rechteckigen Querschnitt.

In der Figur 2c ist eine Aufsicht auf das Zifferblatt 20 dargestellt, hinter dem die zu den Figuren 2a und 2b beschriebene, erfindungsgemäße Beleuchtungsvorrichtung angeordnet ist. Ein Schnitt durch die erfindungsgemäße Beleuchtungsvorrichtung ist in der Figur 2c durch gestrichelte Linien dargestellt, wobei der Schnitt gemäß der Figur 2a durch den Buchstaben a und der Schnitt gemäß der Figur 2b durch den Buchstaben b gekennzeichnet ist. Neben den lichtundurchlässigen ersten Bereichen 21 ist durch lichtdurchlässige zweite Bereiche 22 eine Zahl dargestellt, die aus transparenten Bereichen des Zifferblattes 20 gebildet wird. Die Zahl ist durch die weitere Lichtquelle 19 und die Lichtleiterplatte 18 hinterleuchtbar. Das Segment 22' ist durch die Lichtquelle 10 getrennt von den Segmenten 24 und 24' beleuchtet, die in einem bevorzugten Ausführungsbeispiel jeweils durch eine erfindungsgemäße Beleuchtungsvorrichtung einzeln ansteuerbar sind. Durch die Lichtleiterplatte 18 ist auch bei ausgeschalteten Lichtquellen hinter den Segmenten 22', 24 und 24' eine Grundhelligkeit der Segmente gewährleistet.

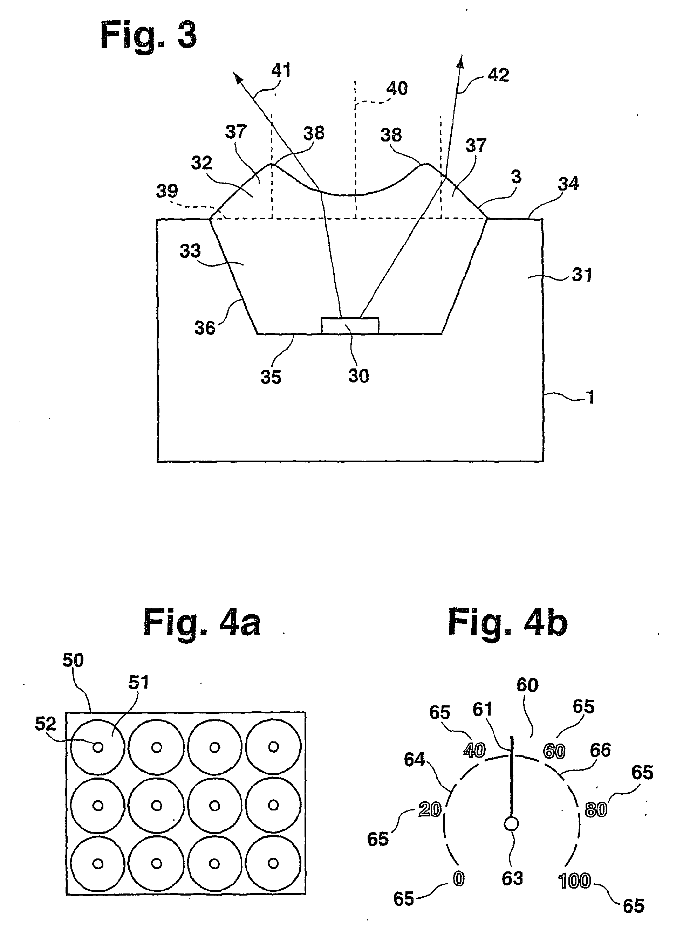

Figur 3 zeigt ein Ausführungsbeispiel für eine erfindungsgemäße Anordnung der Linse direkt an der Lichtquelle. Die zu der Figur 3 beschriebene Lichtquelle wird insbesondere als Lichtquelle 1 in dem zu der Figur 1a erläuterten Ausführungsbeispiel verwendet. An Stelle einer Leuchtdiode kann auch eine Glühlampe, eine Glimmlampe und/oder eine Fluoreszenzlampe verwendet werden. Anhand der Figur 3 wird die Anordnung einer Linse an einer als Leuchtdiode, vorzugsweise als eine sogenannte Top-Leuchtdiode, ausgebildeten Lichtquelle 1 erläutert. Die Lichtquelle 1 weist einen lichterzeugenden Bereich 30 auf, vorzugsweise aus einem Halbleitermaterial, das durch in der Figur 3 nicht gezeigte Ansteuerungsleitungen zur Emission von Lichtstrahlen angeregt wird. Die Lichtquelle 1 weist ferner ein Gehäuse 31 auf, an dem an dem lichterzeugenden Bereich 30 die rotationssymmetrisch zu einer optischen Achse 40 ausgeführte Linse 3 angeordnet ist. Die Linse 3 weist einen ersten Bereich 33 und einen zweiten Bereich 32 auf, wobei der erste Bereich 33 unterhalb einer Oberfläche 34 des Gehäuses 31 angeordnet ist und wobei die Oberfläche 34 in Richtung der Streuscheibe 6 zeigt. Der zweite Bereich 32 ist an der der Streuscheibe 6 zugewandten Seite der Oberfläche 34 angeordnet. Der erste Bereich 33 umfasst den lichterzeugenden Bereich 30 und ist topfförmig ausgeführt. An einem parallel zu der Oberfläche 34 verlaufenden Topfboden 35 schließen linear verlaufende Seitenflächen 36 an, die bis zu der Oberfläche 34 des Gehäuses 31 verlaufen. Die Seitenflächen 36 sind in einem bevorzugten Aufführungsbeispiel reflektierend ausgeführt und bestehen ebenso wie das Gehäuse 31 aus einem weißen Kunststoffmaterial. Ein Übergang zwischen dem ersten Bereich 33 und dem zweiten Bereich 32 ist durch eine gepunktete Linie 39 dargestellt, durch die ein Durchmesser der Linse 3, also ein doppelter Linsenradius, gegeben ist. Der zweite Bereich 32 teilt sich in einen inneren Bereich 38 und einen äußeren Bereich 37 bezüglich der optischen Achse 40 auf, die senkrecht zu der Oberfläche 34 verläuft. Eine Grenz.e des inneren Bereichs ist durch einen vorgegebenen Radius um die optische Achse 40 gegeben, der kleiner als der Linsenradius ist. In dem inneren Bereich 38 ist eine Oberfläche der Linse 3 konkav geformt, so dass die Linse 3 in dem inneren Bereich 38 Licht zerstreuend wirkt. Ein erster Lichtstrahl 41 von dem lichterzeugenden Bereich 30 ist eingezeichnet, der den inneren Bereich 38 durchquert und in dem inneren Bereich 38 die Linse 3 verläßt. Der erste Lichtstrahl 41 wird von der optischen Achse 40 weg gebrochen. Die Wände der Linse 3 schließen in dem äußeren Bereich 37 einerseits an die Oberfläche 34 des Gehäuses 31 und andererseits an den inneren Bereich 38 an. Eine Oberfläche der Linse 3 verläuft in dem äußeren Bereich 37 vorzugsweise linear und bildet einen rund um den inneren Bereich 38 umlaufenden Wall. Ein zweiter Lichtstrahl 42 beginnt an dem lichterzeugenden Bereich 30, verläßt die Linse in dem äußeren Bereich 37 und wird dabei zu der optischen Achse 40 hin gebrochen.

In der Figur 4a ist eine Hinterleuchtungsvorrichtung 50 einer flächigen Anzeige dargestellt, vorzugsweise einer Flüssigkristallanzeige, die vor der Hinterleuchtungsvorrichtung 50 angeordnet ist Eine Vielzahl von erfindungsgemäß ausgeführten Beleuchtungsquellen mit Reflektoren 51 und Lichtquellen 52 sind flächig nebeneinander angeordnet und füllen die Fläche der Hinterleuchtungsvorrichtung fast vollständig aus. Hierdurch ist eine homogene Hinterleuchtung einer vor der Hinterleuchtungsvorrichtung 50 angeordneten Anzeige möglich.

In der Figur 4b ist eine Skalenanzeige mit einem Zifferblatt 60 dargestellt, an der mittels eines Zeigers ein Zahlenwert auf einer Skala 64 angezeigt wird. In einem bevorzugten Ausführungsbeispiel wird die Skalenanzeige für eine Geschwindigkeitsanzeige in einem Kraftfahrzeug verwendet. Ein Zeiger 61 ist über eine Zeigerwelle 63 bewegbar und zeigt einen Wert auf einer Skala 64 an, die mit Zahlenwerten 65 beschriftet ist. In der Figur 4b sind Zahlenwerte 65 "0", "20", "40", "60" und "80" an der Skala 64 angeordnet. Die Skala 64 besteht aus einzelnen Skalensegmenten 66, von denen aus Gründen der Übersichtlichkeit der Zeichnung nur ein Skalensegment 66 mit einem Bezugszeichen versehen ist. Die Skalensegmente 66 sind auf der dem Zeiger 61 abgewandten Seite des Zifferblattes 60 mit jeweils einer erfindungsgemäßen Beleuchtungsvorrichtung versehen, die jeweils getrennt elektrisch ansteuerbar sind, so dass die einzelnen Skalensegmente 66 einzeln beleuchtbar sind. Die Zahlenwerte 65 sind alle durch eine Lichtquelle beleuchtbar, durch die auch Licht in erfindungsgemäßer Weise, wie zu der Figur 2a beschrieben, bei ausgeschalteten Lichtquellen 10 hinter den Skalensegmenten 66 in die Skalensegmente 66 eingekoppelt wird. Die Beleuchtungsvorrichtungen sind dabei vorzugsweise durch eine in der Figur 4b nicht gezeigte Rechenvorrichtung steuerbar, ebenso wie der Zeiger 61 über einen an der Zeigerwelle 63 angeordneten Schrittmotor steuerbar ist, der ebenfalls mit der Rechenvorrichtung verbunden ist. Wird durch eine Eingabe eines Benutzers nun ein Zahlenwert von "60" vorgewählt, z.B. eine Geschwindigkeit von 60 km pro Stunde, so werden alle Skalensegmente ausgehend von dem Zahlenwert 0 bis zum Zahlenwert "60" durch die erfindungsgemäße Beleuchtungsvorrichtungen beleuchtet. Die Skalensegmente von "60" bis "100" bleiben in einem dunklen Zustand und werden nur durch die weitere Lichtquelle 19 schwach erhellt, die auch die Zahlenwerte 65 beleuchtet. Die Geschwindigkeit 60 km pro Stunde ist ein einem bevorzugten Ausführungsbeispiel eine vorgewählte Geschwindigkeit bei einem sogenannten Tempomaten in einem Kraftfahrzeug, bei dem der Recheneinheit eine Geschwindigkeit vorgegeben wird und bei dem ein Fahrzeugantrieb durch die Recheneinheit in der Weise geregelt wird, dass das Fahrzeug mit der gewählten Geschwindigkeit fährt. Die tatsächliche Fahrzeuggeschwindigkeit wird dann durch den Zeiger 61 über der Skala 64 angezeigt, so dass ein Benutzer ständig eine Vergleichsmöglichkeit zwischen einer Sollgeschwindigkeit, nämlich der Geschwindigkeit, die über die hell beleuchteten Skalensegmente dargestellt ist, z.B. 60 km/h, und der tatsächlichen Fahrzeuggeschwindigkeit hat. Da die Skalensegmente 66 jeweils einzeln ansteuerbar sind, können auch andere, beliebige Geschwindigkeitswerte vorgewählt und durch eine entsprechende Beleuchtung der Skalensegmente als eine Sollgeschwindigkeit angezeigt werden.

## Patentansprüche

1. Beleuchtungsvorrichtung zur Beleuchtung einer Anzeigenfläche (7, 22*'*) mit einer Lichtquelle (1, 10) und einem Lichtschacht (4, 12), wobei die Lichtquelle (1, 10) in dem Lichtschacht (4, 12) angeordnet ist, wobei die Anzeigefläche (7, 22*'*) auf der der Lichtquelle (1, 10) abgewandten Seite des Lichtschachts (4, 12) angeordnet ist, wobei das Licht der Lichtquelle (1, 10) in den Lichtschacht (4, 12) einstrahlbar und zu der Anzeigefläche (7, 22*'*) leitbar ist, wobei das Licht durch eine Wand des Lichtschachts (4, 12) reflektierbar ist, wobei zwischen der Litchquelle (1, 10) und der Anzeigefläche (7, 22*'*) eine Linse (3, 15) angeordnet ist, **dadurch gekennzeichnet, dass** der Abstand der Linse (3, 15) zu der Lichtquelle (1, 10) ungefähr die Brennweite der Linse (3, 15) ist.

2. Beleuchtungsvorrichtung nach einem der vorhergehenden Ansprüche, **dadurch gekennzeichnet, dass** der Lichtschacht (4, 12) als ein parabolischer Reflektor (5) ausgebildet ist.

3. Beleuchtungsvorrichtung nach einem der vorhergehenden Ansprüche, **dadurch gekennzeichnet, dass** die Lichtquelle (1, 10) eine Leuchtdiode, eine Glühlampe, eine Glimmlampe und/oder eine Fluoreszenzlampe ist.

4. Beleuchtungsvorrichtung nach einem der vorhergehenden Ansprüche, **dadurch gekennzeichnet, dass** die Linse (3) rotationssymmetrisch zu einer optischen Achse (40) von der Lichtquelle zu der Anzeigefläche (22*'*) ist.

5. Beleuchtungsvorrichtung nach einem der vorhergehenden Ansprüche, **dadurch gekennzeichnet, dass** die Linse (3, 15) zumindest teilweise lichtsammelnd ausgeführt ist.

6. Beleuchtungsvorrichtung nach einem der vorhergehenden Ansprüche, **dadurch gekennzeichnet, dass** die Linse (3, 15) aus einem transparenten Kunststoffmaterial vorzugsweise im Spritzgussverfahren gefertigt ist.

7. Beleuchtungsvorrichtung nach einem der vorhergehenden Ansprüche, **dadurch gekennzeichnet, dass** die Linse (15) auf der der Lichtquelle (10) abgewandten Seite des Lichtschachts (12) zwischen dem Lichtschacht (12) und der Anzeigefläche (22') angeordnet ist.

8. Beleuchtungsvorrichtung nach Anspruch 7, **dadurch gekennzeichnet, dass** die Linse (15) an einen Lichtleiter (16) angeformt ist, dass Licht seitlich in den Lichtleiter (16) einkoppelbar ist und dass das Licht durch den Lichtleiter (16) zu der Anzeigefläche (22*'*) umlenkbar ist.

9. Beleuchtungsvorrichtung nach einem der vorhergehenden Ansprüche, **dadurch gekennzeichnet, dass** eine Linse (3) an der Lichtquelle (1) angeordnet ist.

10. Beleuchtungsvorrichtung nach Anspruch 9, **dadurch gekennzeichnet, dass** die an der Lichtquelle (1) angeordnete Linse (3) einen ersten Bereich (38) aufweist, der durch einen vorgegebenen Radius um die optische Achse (40), der kleiner als ein Linsenradius ist, begrenzt ist, dass die Linse (3) einen zweiten Bereich (37) aufweist, der außerhalb des ersten Bereichs (38) der Linse (3) um die optische Achse (40) angeordnet ist, dass die Linse in dem ersten Bereich (38) von der Lichtquelle abgestrahltes und die Oberfläche der Linse durchquerendes Licht von der optischen Achse (40) der Linse weg brechend ist und das die Linse in dem zweiten Bereich (37) von der Lichtquelle abgestrahltes und die Oberfläche der Linse durchquerendes Licht zu der optischen Achse (40) hin brechend ist.

11. Beleuchtungsvorrichtung nach Anspruch 10, **dadurch gekennzeichnet, dass** die an der vorzugsweise als eine Top Leuchtdiode ausgebildete Lichtquelle (1) angeordnete Linse (3) aus einem Körper der Leuchtdiode ausgeformt ist.

12. Hinterleuchtungsvorrichtung zur Hinterleuchtung einer flächigen Anzeige, vorzugsweise eines Zifferblatts oder einer Flüssigkristallanzeige **dadurch gekennzeichnet, dass** eine Vielzahl von Beleuchtungsvorrichtungen nach einem der vorhergehenden Ansprüche an der flächigen Anzeige (7, 60) angeordnet sind und dass die flächige Anzeige (7, 60) durch die Beleuchtungsvorrichtungen hinterleuchtbar ist.

13. Skalenanzeige in einem Kraftfahrzeug, wobei die Skala in einem Zifferblatt angeordnet ist, wobei die Skala Skalensegmente aufweist, wobei die Skalensegmente jeweils getrennt beleuchtbar sind, **dadurch gekennzeichnet, dass** an jedem Skalensegment (66) eine Beleuchtungsvorrichtung nach einem der Ansprüche 1-12 angeordnet ist.

14. Skalenanzeige nach Anspruch 13 zur Anzeige einer eingestellten Sollgeschwindigkeit einer Tempomatanzeige in einem Kraftfahrzeug.

## Claims

1. Illumination device for illuminating a display area (7, 22') with a light source (1, 10) and a light shaft (4, 12), wherein the light source (1, 10) is arranged in the light shaft (4, 12), wherein the display area (7, 22') is arranged on that side of the light shaft (4, 12) which is remote from the light source (1, 10), wherein the light of the light source (1, 10) can be radiated into the light shaft (4, 12) and be guided to the display area (7, 22'), wherein the light can be reflected by a wall of the light shaft (4, 12), wherein a lens (3, 15) is arranged between the light source (1, 10) and the display area (7, 22'), **characterized in that** the distance from the lens (3, 15) to the light source (1, 10) is approximately equal to the focal length of the lens (3, 15).

2. Illumination device according to one of the preceding claims, **characterized in that** the light shaft (4, 12) is formed as a parabolic reflector (5).

3. Illumination device according to one of the preceding claims, **characterized in that** the light source (1, 10) is a light-emitting diode, an incandescent lamp, a glow discharge lamp and/or a fluorescent lamp.

4. Illumination device according to one of the preceding claims, **characterized in that** the lens (3) is rotationally symmetrical with respect to an optical axis (40) from the light source to the display area (22').

5. Illumination device according to one of the preceding claims, **characterized in that** the lens (3, 15) is embodied such that it is at least partially light-collecting.

6. Illumination device according to one of the preceding claims, **characterized in that** the lens (3, 15) is produced from a transparent plastic material, preferably using an injection-moulding process.

7. Illumination device according to one of the preceding claims, **characterized in that** the lens (15) is arranged between the light shaft (12) and the display area (22') on that side of the light shaft (12) which is remote from the light source (10).

8. Illumination device according to Claim 7, **characterized in that** the lens (15) is formed integrally on an optical waveguide (16), **in that** light can be input in the optical waveguide (16) laterally and **in that** the light can be deflected to the display area (22') by the optical waveguide (16).

9. Illumination device according to one of the preceding claims, **characterized in that** a lens (3) is arranged on the light source (1).

10. Illumination device according to Claim 9, **characterized in that** the lens (3) arranged on the light source (1) has a first region (38) delimited by a predefined radius, which is smaller than a lens radius, about the optical axis (40), **in that** the lens (3) has a second region (37) arranged outside the first region (38) of the lens (3) about the optical axis (40), **in that**, in the first region (38), light emitted by the light source and passing through the surface of the lens is refracted away from the optical axis (40) of the lens and **in that**, in the second region (37), light emitted by the light source and passing through the surface of the lens is refracted towards the optical axis (40).

11. Illumination device according to Claim 10, **characterized in that** the lens (3) arranged on the light source (1) preferably designed as a top light-emitting diode is shaped from a body of the light-emitting diode.

12. Backlighting device for backlighting of a two-dimensional display, preferably of a dial or of a liquid-crystal display, **characterized in that** a plurality of illumination devices according to one of the preceding claims are arranged on the two-dimensional display (7, 60) and **in that** the two-dimensional display (7, 60) can be backlit by the illumination devices.

13. Scale display in a motor vehicle, wherein the scale is arranged in a dial, wherein the scale has scale segments, wherein the scale segments can be illuminated separately in each case, **characterized in that** an illumination device according to one of Claims 1-12 is arranged on each scale segment (66).

14. Scale display according to Claim 13 for displaying a set desired speed of a cruise controller display in a motor vehicle.

## Revendications

1. Dispositif d'éclairage pour éclairer une surface d'affichage (7, 22') comportant une source de lumière (1, 10) et un puits à lumière (4, 12) dans lequel est installée la source lumineuse (1, 10),
la surface d'affichage (7, 22') étant sur le côté du puits de lumière (4, 12) à l'opposé de la source lumineuse (1, 10),
la lumière de la source de lumière (1, 10) rayonnant dans le puits à lumière (4, 12) pour être conduite vers la surface d'affichage (7, 22'),
la lumière étant réfléchie par la paroi du puits à lumière (4, 12), et
une lentille (3, 15) est prévue entre la source de lumière (1, 10) et la surface d'affichage (7, 22').
**caractérisé en ce que**
la distance de la lentille (3, 15) à la source de lumière (1, 10) correspond sensiblement à la distance focale de la lentille (3, 15).

2. Dispositif d'éclairage selon la revendication 1,
**caractérisé en ce que**
le puits à lumière (4, 12) est un réflecteur parabolique (5).

3. Dispositif d'éclairage selon l'une des revendications précédentes,
**caractérisé en ce que**
la source de lumière (1, 10) est une photodiode, une lampe à incandescence, une lampe à décharge et/ ou une lampe fluorescente.

4. Dispositif d'éclairage selon l'une des revendications précédentes,
**caractérisé en ce que**
la lentille (3) est symétrique en rotation par rapport à l'axe optique (40) allant de la source de lumière à la surface d'affichage (22').

5. Dispositif d'éclairage selon l'une des revendications précédentes,
**caractérisé en ce que**
la lentille (3, 15) est au moins en partie réalisée comme lentille collectrice de lumière.

6. Dispositif d'éclairage selon l'une des revendications précédentes,
**caractérisé en ce que**
la lentille (3, 15) est en matière plastique transparente, de préférence fabriquée par injection.

7. Dispositif d'éclairage selon l'une des revendications précédentes,
**caractérisé en ce que**
la lentille (15) est prévue sur le côté du puits à lumière (12) à l'opposé de la source de lumière (10) entre le puits à lumière (12) et la surface d'affichage (22').

8. Dispositif d'éclairage selon la revendication 7,
**caractérisé en ce que**
la lentille (15) est formée sur un guide de lumière (16), la lumière étant couplée latéralement dans le guide de lumière (16) et la lumière étant déviée par le guide de lumière (16) vers la surface d'affichage (22').

9. Dispositif d'éclairage selon l'une quelconque des revendications précédentes,
**caractérisé en ce qu'**
une lentille (3) est prévue sur la source de lumière (1).

10. Dispositif d'éclairage selon la revendication 9,
**caractérisé en ce que**
la lentille (3) sur la source de lumière (1) comporte une première zone (38) délimitée par un premier rayon autour de l'axe optique (40), ce rayon étant inférieur au rayon de la lentille,
la lentille (3) comporte une seconde zone (37) à l'extérieur de la première zone (38) de la lentille (3) autour de l'axe optique (40),
dans la première zone (38) la lentille reçoit la lumière rayonnée par la source de lumière et la lumière traversant la surface de la lentille est diffractée par rapport à l'axe optique (40) de la lentille et
dans la seconde zone (37), la lentille reçoit la lumière de la source de lumière et la lumière qui traverse la surface de la lentille est réfractée en direction de l'axe optique.

11. Dispositif d'éclairage selon la revendication 10,
**caractérisé en ce que**
la lentille (3) installée sur la source de lumière (1) est de préférence réalisée comme diode lumineuse par le dessus et la lentille est formée dans un corps de la lentille luminescente.

12. Dispositif de rétro-éclairage pour éclairer par l'arrière un afficheur plat, de préférence un cadran ou un afficheur à cristaux liquides,
**caractérisé par**
un grand nombre de dispositifs d'éclairage selon l'une des revendications précédentes, installés sur l'afficheur plat (7, 60) éclairé par l'arrière par les dispositifs d'éclairage.

13. Affichage à échelle dans un véhicule automobile selon lequel l'échelle est prévue sur un cadran et cette échelle comporte des segments d'échelle qui peuvent être éclairés chaque fois séparément,
**caractérisé en ce qu'**
à chaque segment d'échelle (66) est associé un dispositif d'éclairage selon l'une des revendications 1 à 12.

14. Afficheur à échelle selon la revendication 13 pour afficher une vitesse de consigne réglée, d'un régulateur de vitesse dans un véhicule automobile.
